# EUROPÄISCHE PATENTSCHRIFT

(11) **EP 2 338 702 B1**
(45) Veröffentlichungstag und Bekanntmachung des Hinweises auf die Patenterteilung: **07.03.2018**
(21) Anmeldenummer: 10186629.1
(22) Anmeldetag: 06.10.2010
(51) Int. Cl.: B60C 11/04, B60C 11/13, B60C 11/03

(54) **Fahrzeugluftreifen**
Pneumatic tyre for a vehicle
Pneu

(30) Priorität: 16.12.2009 DE 102009059169
(43) Veröffentlichungstag der Anmeldung: 29.06.2011
(73) Patentinhaber: Continental Reifen Deutschland GmbH, 30165 Hannover (DE)
(72) Erfinder: Behr, Ulrich, 30169, Hannover (DE); Fischer, Markus, 30823, Garbsen (DE)
(74) Vertreter: Finger, Karsten

(56) Entgegenhaltungen:
- EP-A1- 1 872 973
- DE-A1- 19 946 446
- US-A1- 2007 012 389

## Beschreibung

Die Erfindung betrifft einen Fahrzeugluftreifen mit einem Laufstreifen mit unterschiedlichen Profilstrukturen in den Laufstreifenhälften, wobei der Reifen einen Reifeninnenschulterbereich und einen Reifenaußenschulterbereich aufweist und derart am Fahrzeug zu montieren ist, dass sich der Reifenaußenschulterbereich an der Fahrzeugaußenseite befindet, wobei der Laufstreifen im Reifenaußenschulterbereich Profilelemente mit über die Aufstandsflächenbreite hinaus verlaufenden Quernuten aufweist.

Es ist bekannt, Laufstreifen von Fahrzeugluftreifen in funktional unterschiedliche Bereiche aufzuteilen, wobei das Laufstreifenprofil deutlich asymmetrisch gestaltet wird. So ist beispielsweise aus der DE-A-197 53 819 ein Reifen *der eingangs genannten Art* mit unterschiedlichen Profilelementen im Außen- und Innenschulterbereich bekannt, wobei der Laufstreifen im Außenschulterbereich Profilpositive aufweist, deren Querschubsteifigkeit höher ist als jene der Profilpositive im Innenschulterbereich.

Es ist ferner bekannt, Profilblöcke, die durch Nuten voneinander getrennt sind, örtlich über Grundanhebungen in den Nuten miteinander zu verbinden. Laufstreifen mit auf diese Weise gegeneinander abgestützten Profilblöcken sind aus der WO-A-02/087902 sowie aus der WO-A- 03/013883 bekannt. Weiterer Fahrzeugluftreifen mit einem Laufstreifen mit in Richtung der Laufstreifenränder verlaufenden Quernuten, in welchen Grundanhebungen ausgebildet sind, sind aus der EP 1 872 973 A1 - *dieser ist auch ein Reifen der eingangs genannten Art -* und der US 2007/0012389 A1 bekannt.
jeweils der Außenschulterbereich der kurveninnenseitig befindlichen Reifen, auch außerhalb der Aufstandsfläche, stark beansprucht, wodurch die Gefahr besteht, dass das Gummimaterial in diesem Bereich, der im Wesentlichen dem Gürtelkantenbereich zugeordnet ist, soweit abreibt, dass die Gürtellagenkanten freigelegt werden.

Der Erfindung liegt somit die Aufgabe zugrunde, bei einem Reifen der eingangs genannten Art sicherzustellen, dass der Reifen den genannten Beanspruchungen stand hält, ohne dass die Gefahr des Freikommens der Gürtellagenkanten im Außenschulterbereich besteht.

Gelöst wird die gestellte Aufgabe erfindungsgemäß dadurch, im Außenschulterbereich axial außerhalb der Aufstandsflächenbreite des Reifens in den Quernuten jeweils eine die Quernuttiefe lokal verringernde Grundanhebung ausgebildet ist, welche die Quernutflanken miteinander verbindet.

Die Grundanhebungen stabilisieren und verstärken die Reifenschulter außerhalb der Aufstandsfläche und verhindern in diesem Bereich der Reifenaußenschulter ein Abreiben des Gummis bei starker Handling-Beanspruchung und derart ein Freikommen der Gürtellagenkanten.

Die optimale Lage für die Grundanhebungen ist erfindungsgemäß radial außerhalb des Randabschnittes der breitesten Gürtellage.

Für den erwünschten Stabilisierungseffekt ist es von Vorteil, wenn die Grundanhebungen die Quernuttiefe örtlich um 40% bis 60% reduzieren und wenn die Grundanhebungen in Richtung der Quernuterstreckung eine Länge von 3 mm bis 10 mm aufweisen.

Die im Außenschulterbereich wirkenden Kräfte und Beanspruchungen können je nach Fahrweise relativ groß sein. Für eine optimale Kräfteverteilung und Vermeidung von Spannungsspitzen ist es Vorteil, wenn die zur Laufstreifenmitte weisenden Flanken der Grundanhebungen gegenüber der radialen Richtung geneigt sind, insbesondere mit einem großen Radius gerundet ausgeführt sind.

Weitere Merkmale, Vorteile und Einzelheiten der Erfindung werden nun anhand der Zeichnung, die ein Ausführungsbeispiel darstellt, näher beschrieben. Dabei zeigen
Fig. 1 eine Draufsicht auf einen Umfangsabschnitt eines Laufstreifens eines Fahrzeugluftreifens und
Fig. 2 eine Schnittdarstellung entlang der Linie II-II der Fig. 1.

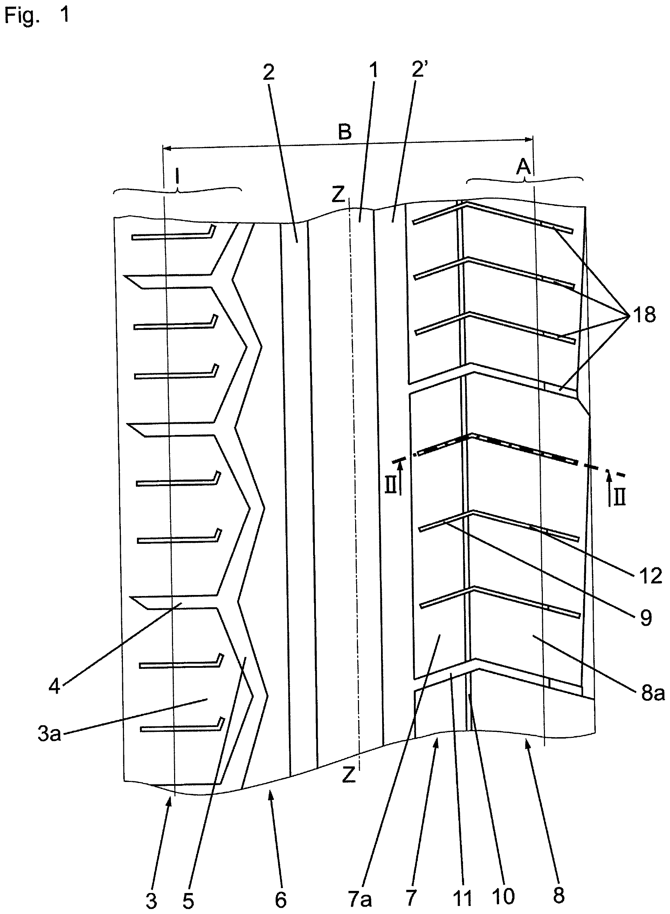

Fig. 1 zeigt einen Umfangsabschnitt eines Laufstreifens für einen Fahrzeugluftreifen für Personenkraftwagen, wobei der Laufstreifen asymmetrisch ausgeführt ist, und in den beiden Laufstreifenhälften unterschiedliche Profilstrukturen aufweist. Der Laufstreifen bzw. der Reifen weist daher einen Innerschulterbereich I und einen Außenschulterbereich A auf. Ein mit einem derartigen Laufstreifen versehender Reifen ist so am Fahrzeug zu montieren ist, dass sich der Außenschulterbereich A an der Fahrzeugaußenseite befindet.

Der in Fig. 1 beispielhaft gezeigte Laufstreifen weist entlang des Reifenäquators, welcher durch die Linie Z-Z gekennzeichnet ist, eine in Umfangsrichtung umlaufende Profilrippe 1 auf, welche von zwei breiten, in Umfangsrichtung gerade umlaufenden Umfangsnuten 2 und 2' begrenzt ist. An der Innenschulter I ist der Laufstreifen mit einer Blockreihe 3 versehen, deren Profilblöcke 3a voneinander durch Quernuten 4 getrennt sind. Eine in Umfangsrichtung in Zick-Zack-Form verlaufende Umfangsnut 5 trennt die Blockreihe 3 von einer weiteren Profilrippe 6, die laufstreifeninnenseitig von der Umfangsnut 2 begrenzt ist. Jeweils zwei zur Laufstreifenmitte vorspringende Zick-Zack-Abschnitte der Umfangsnut 5 begrenzen je einen der Profilblöcke 3a aus der Blockreihe 3. An die Umfangsnut 2' schließen in Richtung Außenschulter A zwei Blockreihen 7 und 8 an. Die Blockreihe 7 setzt sich aus in Umfangsrichtung langgestreckt ausgeführten Blöcken 7a zusammen, welche zusätzlich von Sacknuten 9 eingeschnitten sind, welche von einer die beiden Blockreihen 7 und 8 voneinander trennenden, schmalen und in Umfangsrichtung gerade umlaufenden Umfangsnut 10 in die Blöcke 7a hinein verlaufen. Die langgestreckten Blöcke 7a sind voneinander durch Quernuten 11 getrennt. Entlang der Außenschulter A des Laufstreifens bzw. Reifen verläuft die Blockreihe 8, deren Einzelblöcke 8a voneinander durch Quernuten 12 getrennt sind, welche in Verlängerung der Quernuten 11 und der Sacknuten 9 verlaufen.

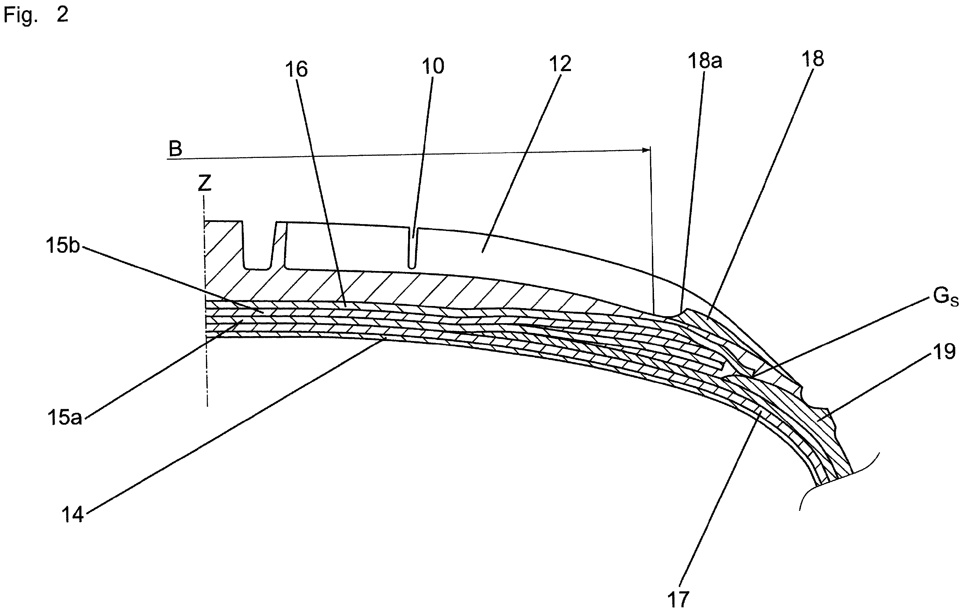

Die Quernuten 12 erstrecken sich über die Außenschulter A und verlaufen daher über die Aufstandsflächenbreite B des Reifens bzw. Laufstreifens, die in Fig. 1 und Fig. 2 mit B bezeichnet ist, hinaus. Die Aufstandsflächenbreite B definiert jenen Laufstreifenbereich, mit welchem der am Fahrzeug montierte Reifen - unter Nenndruck und Nennlast - mit dem Untergrund in Kontakt kommt. Fig. 2 zeigt einige Reifenbauteile im Querschnitt, insbesondere eine Innenschicht 14, eine Karkasseinlage 17, eine Seitenwand 19 und einen Gürtelverband aus zwei Gürtellagen 15a und 15b sowie einer diese abdeckenden und randseitig überdeckenden Gürtelbandage 16. Wie insbesondere Fig. 2 zeigt wird die Tiefe der Quernuten 12 über ihren Verlauf in Richtung Seitenwand 19 kontinuierlich geringer. Die Gürtelkante Gₛ wird durch die Außenkante der am weitesten außen endenden Gürtellage bestimmt und ist beim gezeigten Ausführungsbeispiel der Rand der Gürtelbandage 16. In den Quernuten 12 ist jeweils in jenem Bereich, welcher sich radial außerhalb der Gürtelkante Gₛ befindet, eine Grundanhebung 18 ausgebildet. Die Grundanhebungen 18 sind somit bei der gezeigten Ausführungsform im Reifenquerschnitt im Wesentlichen derart positioniert, dass sie sich radial außerhalb des Randabschnittes der Gürtelbandage befinden. Die Grundanhebungen 18 sind Gummistege, die zwischen den Quernutflanken der Quernut 12 verlaufen und diese verbinden. Durch die Grundanhebungen 18 wird der Nutgrund der Quernuten 12 örtlich auf 40% bis 60% der ansonsten vorhandenen Nuttiefe angehoben, wobei, wie Fig. 2 zeigt, die Grundanhebungen 18 die Querschnittsfläche der Quernuten 12 im Bereich ihres Verlaufes etwa halbieren und derart in ihrem Verlauf Richtung Seitenwand 19 dünner werden und insbesondere flach auslaufen. In der Seitenansicht des Reifens verlaufen die Grunderhebungen 18 an der Außenschulter entlang eines Kreises. Die Erstreckung der Grundanhebungen 18 in axialer Richtung - in Richtung der Quernuterstreckung - beträgt zwischen 3 mm und 10 mm und ist für alle Grundanhebungen 18 gleich groß. Die zur Laufstreifenmitte weisenden Flanken 18a der Grundanhebungen 18 sind gegenüber der radialen Richtung geneigt, insbesondere mit einem großen Radius gerundet ausgeführt.

Erfindungsgemäß ausgeführte Laufstreifen sind vor allem für Fahrzeugluftreifen für sportliche Kraftfahrzeuge vorgesehen. Die Grundanhebungen 18 tragen dazu bei, bei entsprechender Handling-Beanspruchung, insbesondere bei Kurvenfahrt unter höheren Geschwindigkeiten, einen Abrieb von Gummi außerhalb der Aufstandsfläche zu reduzieren damit ein Freikommen der Gürtellagenkanten zu vermeiden.

Die Erfindung ist auf das dargestellte Ausführungsbeispiel nicht eingeschränkt. Der Laufstreifen kann, abgesehen von Profilelementen mit Quernuten im Außenschulterbereich, abweichend ausgeführte Profilstrukturen aufweisen.

### Bezugszeichenliste

- 1: Profilrippe
- 2: Umfangsnut
- 2': Umfangsnut
- 3: Blockreihe
- 3a: Profilblock
- 4: Quernut
- 5: Umfangsnut
- 6: Profilrippe
- 7: Blockreihe
- 7a: Block
- 8: Blockreihe
- 8a: Block
- 9: Sacknut
- 10: Umfangsnut
- 11: Quernut
- 12: Quernut
- 14: Innenschicht
- 15a: Gürtellage
- 15b: Gürtellage
- 16: Gürtelbandage
- 17: Karkasseinlage
- 18: Grundanhebung
- 19: Seitenwand

## Patentansprüche

1. Fahrzeugluftreifen mit einem Laufstreifen mit unterschiedlichen Profilstrukturen in den Laufstreifenhälften, wobei der Reifen einen Reifeninnenschulterbereich (I) und einen Reifenaußenschulterbereich (A) aufweist und derart am Fahrzeug zu montieren ist, dass sich der Reifenaußenschulterbereich (A) an der Fahrzeugaußenseite befindet, wobei der Laufstreifen im Reifenaußenschulterbereich (A) Profilelemente mit über die Aufstandsflächenbreite (B) hinaus verlaufenden Quernuten (12) aufweist,
**dadurch gekennzeichnet,**
**dass** im Außenschulterbereich (A) axial außerhalb der Aufstandsflächenbreite (B) des Reifens in den Quernuten (12) jeweils eine die Quernuttiefe lokal verringernde Grundanhebung (18) ausgebildet ist, welche die Quernutflanken miteinander verbindet.

2. Fahrzeugluftreifen nach Anspruch 1, **dadurch gekennzeichnet, dass** die Grundanhebungen (18) radial außerhalb des Randabschnittes der breitesten Gürtellage (16) positioniert sind.

3. Fahrzeugluftreifen nach Anspruch 1 oder 2, **dadurch gekennzeichnet, dass** die Grundanhebungen (18) die Quernuttiefe örtlich um 40% bis 60% reduzieren.

4. Fahrzeugluftreifen nach einem der Ansprüche 1 bis 3, **dadurch gekennzeichnet, dass** die Grundanhebungen (18) in Richtung der Quernuterstreckung eine Länge von 3 mm bis 7 mm aufweisen.

5. Fahrzeugluftreifen nach einem der Ansprüche 1 bis 4, **dadurch gekennzeichnet, dass** die zur Laufstreifenmitte weisenden Flanken (18a) der Grundanhebungen (18) gegenüber der radialen Richtung geneigt sind, insbesondere mit einem großen Radius gerundet ausgeführt sind.

## Claims

1. Pneumatic vehicle tyre comprising a tread with different profile structures in the halves of the tread, the tyre having a tyre inner shoulder region (I) and a tyre outer shoulder region (A) and being intended to be fitted on the vehicle in such a way that the tyre outer shoulder region (A) is located on the outer side of the vehicle, the tread in the tyre outer shoulder region (A) having profile elements with transverse channels (12) that extend over the width (B) of the contact area, **characterized in that** a raised base portion (18), which locally reduces the depth of the transverse channel and connects the flanks of the transverse channel to one another, is respectively formed in the transverse channels (12) in the outer shoulder region (A) axially outside the width (B) of the contact area of the tyre.

2. Pneumatic vehicle tyre according to Claim 1, **characterized in that** the raised base portions (18) are positioned radially outside the peripheral portion of the widest bracing ply (16).

3. Pneumatic vehicle tyre according to Claim 1 or 2, **characterized in that** the raised base portions (18) reduce the depth of the transverse channel locally by 40% to 60%.

4. Pneumatic vehicle tyre according to one of Claims 1 to 3, **characterized in that** the raised base portions (18) have a length in the direction of the extent of the transverse channel of 3 mm to 7 mm.

5. Pneumatic vehicle tyre according to one of Claims 1 to 4, **characterized in that** the flanks (18a) of the raised base portions (18) that are facing the middle of the tread are inclined with respect to the radial direction, in particular are configured such that they are rounded with a large radius.

## Revendications

1. Pneu de véhicule comprenant une bande de roulement avec des structures profilées différentes dans les moitiés de la bande de roulement, le pneu présentant une région d'épaulement intérieur de pneu (I) et une région d'épaulement extérieur de pneu (A) et devant être monté sur le véhicule de telle sorte que la région d'épaulement extérieur de pneu (A) se trouve au niveau du côté extérieur du véhicule, la bande de roulement présentant, dans la région d'épaulement extérieur de pneu (A) des éléments profilés avec des rainures transversales (12) s'étendant au-delà de la largeur de la surface d'appui au sol (B), **caractérisé en ce que**
dans la région d'épaulement extérieur (A), axialement à l'extérieur de la largeur de la surface d'appui au sol (B) du pneu, un rehaussement de base (18) réduisant localement la profondeur de la rainure transversale étant à chaque fois réalisé dans les rainures transversales (12), lequel relie l'un à l'autre les flancs de la rainure transversale.

2. Pneu de véhicule selon la revendication 1, **caractérisé en ce que** les rehaussements de base (18) sont positionnés radialement à l'extérieur de la portion de bord de la couche de ceinture la plus large (16).

3. Pneu de véhicule selon la revendication 1 ou 2, **caractérisé en ce que** les rehaussements de base (18) réduisent localement la profondeur de la rainure transversale de 40 % à 60 %.

4. Pneu de véhicule selon l'une quelconque des revendications 1 à 3, **caractérisé en ce que** les rehaussements de base (18) présentent, dans la direction de l'étendue de la rainure transversale, une longueur de 3 mm à 7 mm.

5. Pneu de véhicule selon l'une quelconque des revendications 1 à 4, **caractérisé en ce que** les flancs (18a) des rehaussements de base (18) tournés vers le centre de la bande de roulement sont inclinés par rapport à la direction radiale, en particulier sont réalisés sous forme arrondie avec un grand rayon.
